# FASCICULE DE BREVET EUROPEEN

(11) **EP 3 384 450 B1**
(45) Date de publication et mention de la délivrance du brevet: **02.07.2025**
(21) Numéro de dépôt: 16810075.8
(22) Date de dépôt: 05.12.2016
(51) Int. Cl.: G06Q 30/0601, G06Q 30/02, H04N 1/00, H04N 1/32

(54) **PROCÉDÉ DE PRODUCTION ET DE PERSONNALISATION D'ARTICLES DE GRANDE CONSOMMATION EN VUE DE L'ACCÈS À DES CONTENUS PERSONNALISÉS**
VERFAHREN ZUR HERSTELLUNG UND ANPASSUNG VON MASSENMARKTARTIKELN IM HINBLICK AUF DEN ZUGRIFF AUF KUNDENSPEZIFISCHE INHALTE
METHOD FOR PRODUCING AND CUSTOMIZING MASS MARKET ITEMS WITH A VIEW TO ACCESS TO CUSTOMIZED CONTENT

(30) Priorité: 03.12.2015 FR 1561828; 22.12.2015 FR 1570100
(43) Date de publication de la demande: 10.10.2018
(73) Titulaire: Digital Packaging, 92310 Sèvres (FR)
(72) Inventeur: PINGEOT, Gilles, 78150 Le Chesnay (FR)
(74) Mandataire: Le Forestier, Eric
(86) Numéro de dépôt international: PCT/IB2016/057360
(87) Numéro de publication internationale: WO 2017/093984

(56) Documents cités:
- WO-A1-2015/015134
- FR-A1- 2 768 967
- FR-A1- 2 998 881
- FR-A1- 3 015 444
- FR-A1- 3 021 794
- US-A1- 2012 181 330
- US-A1- 2013 026 241
- US-A1- 2013 260 727
- US-A1- 2015 231 896
- ANONYMOUS: "HP Mosaic for SmartStream Designer: Generating One-of-a-Kind Graphics for Variable Data Campaigns", 16 September 2015 (2015-09-16), XP055571138, Retrieved from the Internet <URL:https://www.printingnews.com/software-workflow/prepress/article/12099294/hp-mosaic-for-smartstream-designer-generating-oneofakind-graphics-for-variable-data-campaigns> [retrieved on 20190319]
- ANONYMOUS: "HP SmartStream Designer 19 for Adobe Illustrator CC 2015", 21 September 2015 (2015-09-21), XP055571444, Retrieved from the Internet <URL:https://h71044.www7.hp.com/ga/2009/_files_/content/smartstreamdesigner/_download_/ca494-18850_hp_sms_designer_19_for_adobe_illustrator-user_reference.pdf> [retrieved on 20190319]
- ANONYMOUS: "HP SmartStream Designer HP Mosaic -Dynamic Personalization How-to Guide", 1 November 2014 (2014-11-01), XP055572372, Retrieved from the Internet <URL:http://tinyurl.com/y4r243w9> [retrieved on 20190321]
- TOMER FILIBA: "Print-Scan Resilient Watermarking in the Wavelet Domain", 1 January 2012 (2012-01-01), XP055572949, Retrieved from the Internet <URL:http://tomerfiliba.com/static/academia/DWT-Watermarking/image-project.pdf> [retrieved on 20190322]
- GUNTER OLLMANN: "ANTI-FRAUD IMAGE SOLUTIONS", 30 April 2009 (2009-04-30), XP055637257, Retrieved from the Internet <URL:http://www.technicalinfo.net/papers/PDF/Anti-FraudImageSolutions.pdf> [retrieved on 20191030]
- ANONYMOUS: "Studio Toolkit for Shrink Sleeves 14.1 Manuel d'utilisation", 1 August 2015 (2015-08-01), XP055638713, Retrieved from the Internet <URL:http://docs.esko.com/docs/fr-fr/studiotoolkitforshrinksleeves/14.1/userguide/pdf/studiotoolkitforshrinksleeves.pdf> [retrieved on 20191104]
- HP: "HP SmartStream Designer", 1 July 2015 (2015-07-01), XP055304544, Retrieved from the Internet <URL:http://h20195.www2.hp.com/v2/GetPDF.aspx/4AA3-3454ENW.pdf> [retrieved on 20160921]
- HP: "HP SmartStream Designer", 1 March 2010 (2010-03-01), XP055304551, Retrieved from the Internet <URL:http://www.hp.com/hpinfo/newsroom/press_kits/2010/IPEX2010/UK_SMS_Designer.pdf> [retrieved on 20160921]

## Description

### Domaine de l'invention

La présente invention concerne d'une façon générale le domaine de la personnalisation d'articles, notamment de consommation courante ou de grande distribution, et de leurs emballages.

### Arrière-plan de l'invention

On connaît déjà des systèmes permettant à une personne de personnaliser un emballage, par exemple l'emballage d'un cadeau pour l'un de ses proches.

Une telle personnalisation peut être réalisée avec du texte, des images, etc., qui sont téléchargés à partir d'un système informatique de l'utilisateur vers un serveur, le serveur étant associé à un équipement d'impression pour imprimer sur un élément de l'emballage (papier, carton, manchon en matière plastique, etc.) le texte ou l'image.

A cet effet, le client (celui qui offre le cadeau) accède à un site Web dédié et peut interagir avec celui-ci pour personnaliser l'emballage (par exemple en saisissant du texte ou en téléchargeant un fichier de photo vers le serveur).

Des contraintes techniques (format de fichier, charte de couleurs ou de polices de caractères) de la marque, etc.) peuvent être imposées à l'ensemble du processus.

Ce site Web coopère avec un programme apte à générer directement le fichier (par exemple un fichier selon le format PDF) utilisable pour impression directe à l'aide d'un équipement d'impression numérique approprié.

L'utilisateur peur pré-visualiser le fichier PDF avant validation finale. Il peut également recevoir par courriel le fichier PDF validé après avoir placé son ordre.

On connaît également des procédés pour diversifier des emballages ou des apparences d'un même produit du commerce fabriqué à grande échelle. C'est ainsi que l'on voit fleurir de nos jours des bouteilles de boissons avec des prénoms et de nombreux articles de grande consommation ayant des visuels diversifiés, par exemple à l'aide de technologies de type Mosaic^{®} de la suite SmartStream Designer de la société Hewlett Packard, USA.

### Résumé de l'invention

La présente invention vise à étendre les possibilités de diversification de l'apparence visuelle des d'articles du commerce, publicitaires, cadeaux, etc., en perturbant aussi peu que possible cette apparence visuelle pour le consommateur.

En particulier, un objet de l'invention est d'associer à un produit fabriqué à grande échelle une adresse unique d'un espace accessible par réseau à partir d'un équipement intelligent, et ceci sans recourir à un code spécifique apparent tel que code-barres, QR-code ou équivalent, susceptible de nuire à l'apparence visuelle du produit.

Un objet auxiliaire de l'invention est de pouvoir prendre en compte les déformations d'images se produisant lorsque des manchons-décor rétractables sont appliqués sur des produits galbés ou cylindriques, pouvant donner lieu à des erreurs de lecture du fait de ces déformations.

On propose ainsi selon un premier aspect un procédé tel que défini dans la revendication 1.

Ce procédé comprend avantageusement mais facultativement les caractéristiques additionnelles des revendications dépendantes 2 et 3.

### Brève description des dessins

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel :
La Figure 1 illustre schématiquement un procédé pour associer à un ensemble d'articles de grande consommation des adresses uniques exploitables par des équipements communicants,
Les Figures 2 à 6 illustrent de façon simplifiée des modalités de génération d'images uniques destinées à être mises en œuvre dans le procédé de la Figure 1,
la Figure 7 illustre schématiquement un procédé d'accès à un espace unique associé à un article donné obtenu par le procédé de la Figure 1,
la Figure 8 illustre une application particulière de l'invention pour la personnalisation d'un emballage-cadeau, et
la Figure 9 illustre schématiquement le recours à un manchon thermorétractable doté d'un gabarit pour la mise en œuvre d'une conversion anamorphique dans une amélioration de la présente invention.

### Description détaillée d'une forme de réalisation préférée

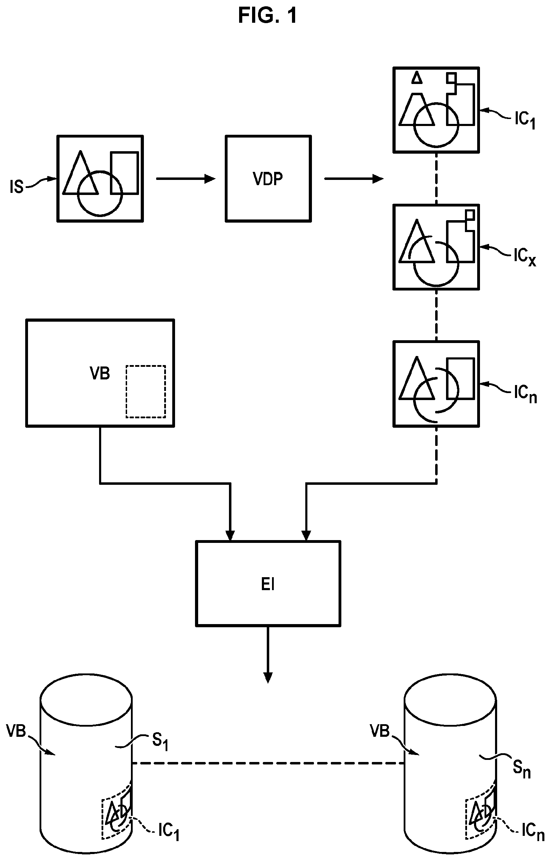

En référence tout d'abord à la Figure 1, on a représenté un système pour générer des emballages, manchons décor, etc. de produits intégrant chacun une image décor variable ICx encodant une adresse (typiquement une adresse URL) d'un espace de stockage ayant vocation à devenir un espace personnel, à partager le cas échéant, associé de façon unique au produit.

Dans une première forme de réalisation, la génération des images décors variables ICx est réalisée à l'aide d'un outil d'impression de données variables VDP (Variable Data Printing en terminologie anglo-saxonne), par exemple basé sur la technologie Mosaic^{®} de la solution SmartStream Designer^{®} proposée dans le commerce par la société Hewlett Packard, Etats-Unis d'Amérique. Une telle technologie est capable de générer des milliers d'images différentes à partir d'un fichier image source, en effectuant une fragmentation de l'image source combinée à des traitements numériques (translations, rotations, , ou conversions plus complexes) de ces fragments, tout en conservant une impression visuelle très homogène de l'ensemble des images dans le cas où l'image source est elle-même homogène.

Dans une forme de réalisation, ce fichier image source IS contient un visuel (formes, couleurs, etc.) choisi par exemple en fonction d'un visuel de base VB de l'emballage, par exemple un visuel cohérent avec l'apparence d'une marque associée au cadeau qui sera contenu dans l'emballage, de telle sorte que chaque image unique obtenue avec l'outil VDP présente elle-même un visuel qui reste cohérent avec l'apparence de la marque. Cette propriété est toutefois entièrement facultative.

Typiquement l'image source IS peut être une combinaison de formes et de couleurs quelconque (logo de la marque, image du produit contenu dans l'emballage, décor, etc.).

Par ailleurs, chaque image unique ICx générée par l'outil VDP est traitée de manière à encoder une adresse unique Cx (URL ou autre) en vue de permettre à un utilisateur, par exemple à l'aide de son smartphone, d'interagir avec un serveur en vue de personnaliser un contenu associé à cette adresse unique, comme on le verra en détail plus loin.

Dans une première forme de réalisation, cet encodage est réalisé par une combinaison de la technologie « Mosaic » précitée et d'une solution de reconnaissance d'images disponible dans le commerce ou dérivée d'une technologie disponible dans le commerce, capable d'associer à une image unique donnée un code numérique unique. Cette technologie peut être par exemple l'une des suivantes :
- LTU Cloud fournie par la société Jastec France, Paris, France (voir http://www.ltutech.com/fr/);
- LogoGrab (voir https://www.logograb.com/);
- Camfind (voir http://camfindapp.com/);
- Recognize API | Mashape (voir https://www.recognize.im/);
- Kooaba de la société Qualcomm (voir https://www.qualcomm.fr/) ;
- Moodstocks, détenue par Google ;
- Catchoom (voir http://catchoom.com/);
- **Imagga** API (voir https://imagga.com/)
- TinEye (voir https://services.tineye.com/TinEyeAPI
- Pictorria - is a platform for sharing image recognition algorithms.
- Picitup API - http://www2.picitup.com/picliq
- Deepvu vufind - http://www.vufind.com/photo-analytics.html
- Talk Walker (voir http://go.talkwalker.com/IQ-Apps-Landing-Pages_Image-Recognition.html).

La plupart de ces solutions proposent des interfaces de programmation d'application (API pour « Application Programming Interface » en terminologie anglo-saxonne) permettant de concevoir des applicatifs, notamment pour terminaux tels que smartphones, les intégrant.

A partir de ces solutions, chaque image peut être discriminée par rapport aux autres par analyse d'image et être associée à un identifiant unique, qui lui-même comme on le verra dans la suite permettra de diriger l'application vers un espace numérique (par exemple accessible via une URL) associé de façon biunivoque à l'image considérée.

Dans un exemple de réalisation plus particulier, la technologie Mosaic^{®} est utilisée pour générer à partir d'un fichier d'image vectorielle source IS, notamment par découpage en pavés, rotations, zooms, un nombre relativement important d'images individuelles uniques qu'un logiciel de reconnaissance d'image tel que celui basé sur la technologie LTU est capable de discriminer.

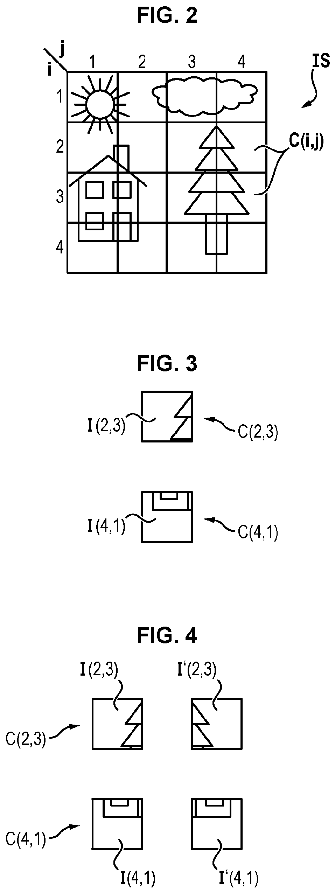

Ainsi, en référence aux Figures 2 et 3, un fichier d'image décor vectorielle source IS est dans le présent exemple décomposé à laide de NxN pavés ou carreaux C(i,j) (ici seulement 4x4 carreaux pour illustrer l'invention de façon simplifiée), en NxN sous-images I(i,j) de l'image de départ, correspondant aux carreaux respectifs. Chaque sous-image I(i,j) est utilisée comme image unique ICx pour engendrer une diversité dans les visuels à imprimer pour autant d'articles. A cet effet, le système génère à partir de chaque carreau, constitué d'une sous-image de l'image vectorielle, une image bitmap destinée à être insérée à l'emplacement approprié dans une image globale destinée à être imprimée sur l'article (ou sur un manchon, ou sur un emballage, etc., de l'article).

La Figure 3 illustre ainsi deux sous-images I(2,3) et I(4,1) correspondant aux carreaux C(2,3) et C(4,1) de l'image de départ IS.

La solution commerciale Mosaic^{®} commercialisée par Hewlett-Packard est capable d'effectuer ce traitement initial.

Pour multiplier par deux le nombre de sous-images possibles, le système peut engendrer pour chaque sous-image I(i,j) une deuxième sous-image I'(i,j) qui soit l'image par miroir de la sous-image I'(i,j) de départ. Ce traitement est réalisé de façon simple par inversion de coordonnées selon l'un des deux axes, soit au niveau de chaque sous-image, soit encore au niveau de l'image vectorielle source IS dont le système forme d'abord une image miroir vectorielle globale IS', puis forme des sous-images selon le même quadrillage que pour l'image IS, à partir de cette image miroir IS' globale.

Par ailleurs, dans le cas où le traitement numérique « miroir » est mis en œuvre directement au niveau des sous-images, il peut être effectué soit au niveau des sous-images vectorielles, soit après conversion de celles-ci en bitmap.

Ainsi la Figure 4 illustre deux sous images de l'image de départ IS, à savoir I(2,3), I(4,1) correspondant ici à nouveau aux carreaux C(2,3) et C(4,1), ainsi que deux sous-images I'(2,3), I'(4,1) qui sont dérivées des images I(2,3), I(4,1) par application de la fonction miroir (ici un retournement horizontal).

Toutefois, dans la pratique, les technologies de diversification à partir d'une image vectorielle source permettent d'obtenir un nombre relativement limité de sous images diverses et capables d'être identifiées par analyse d'image sans générer de doublons (typiquement quelques milliers). Ceci peut s'avérer adapté pour diversifier des articles fabriquées en quantités modérées, mais ne convient pas dès qu'il s'agit de diversifier des millions d'articles. Ainsi, dans l'exemple qui précède, une subdivision d'une image source en 100 x 100 carreaux permet de réaliser 10 000 sous-images, et ce nombre peut être doublé avec le recours à des sous-images miroirs.

Si la subdivision de l'image de départ est plus fine, la capacité de discrimination entre sous-images baisse rapidement, et l'on atteint les limites de l'approche.

On va décrire maintenant un perfectionnement permettant d'atteindre l'objectif d'une très grande multiplication des sous-images diversifiées, sans complexifier significativement le processus.

Selon ce perfectionnement, on prépare initialement non seulement une image source IS comme précédemment (ci-après « image décor »), mais également une image de motifs source MS (ci-après « image motif »).

Contrairement à l'image décor source IS dont les contraintes sont d'une part qu'elle présente un contenu riche, s'harmonisant avec le packaging des produits (dans le cas où ce critère est souhaité), et d'autre part qu'il n'existe pas deux carreaux avec des sous images identiques ou en tout cas non discernables l'une de l'autre par la solution d'analyse d'image, l'image motif source MS peut être réalisée de façon beaucoup moins contraignante : elle n'a pas à satisfaire à des critères esthétiques, et elle peut comporter des motifs simples, en étant ainsi extrêmement facile à générer (sa génération pouvant même être automatisée sans difficulté).

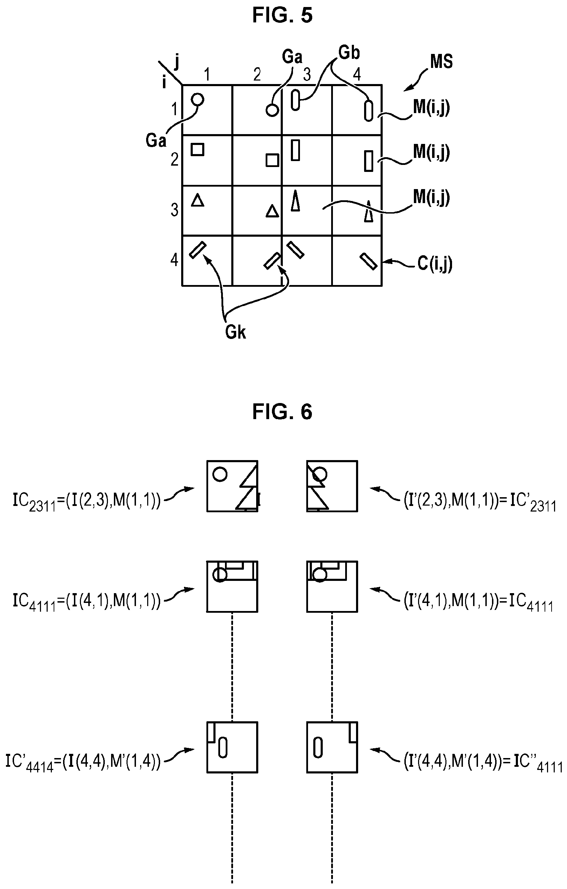

Un exemple simplifié de l'image motif source MS est représenté sur la Figure 5. Cette image est telle que lorsqu'elle est subdivisée selon un quadrillage C(i,j) identique à celui utilisé pour l'image décor source IS, on trouve au niveau de chaque carreau C(i,j) une sous-image (M(i,j) de l'image motif source MS, contenant un élément graphique simple tel que Ga, Gb, Gc, etc.

Chaque motif Gk est par exemple une forme géométrique de base (trait, forme fermée ou ouverte, combinaisons simples de traits et/ou de formes) de préférence agencée de façon non-symétrique dans le carreau respectif,

Par ailleurs, comme illustré, on peut prévoir dans un certain carreau un certain motif et dans un ou plusieurs autres carreaux un motif identique mais positionné différemment.

Les fragments de l'image motif source MS sont utilisés comme calques des fragments de l'image décor source IS, pour générer des images uniques qui sont des combinaisons de chaque sous-image de l'image décor avec chaque sous-image de l'image motif, la diversité assurée au niveau des deux types de sous-images permettant de garantir la diversité des sous-images combinées.

La Figure 6 illustre différents exemples de combinaisons de sous-images I(i,j) de l'image décor et de sous-images M(i', j') de l'image motif, ces combinaisons étant notées (I(i,j), M(i', j')) ou encore ICiji'j' éventuellement complété de « prime » lorsque des images miroirs sont mises en jeu.

On comprend que pour 100 sous-images de l'image décor (quadrillage de 10 x 10) et 100 sous-images de l'image motif (même quadrillage), on peut obtenir 10 000 sous images différentes.

Si l'on exploite également une image miroir de l'image décor et une image miroir de l'image motif (en agençant alors les éléments graphiques de façon impérativement non symétrique dans leur carreau respectif) ce nombre peut être quadruplé.

Et en utilisant une deuxième image motif source MS2 de même configuration que l'image motif MS mais avec des éléments graphiques intrinsèquement différents et/ou agencés différemment dans leurs carreaux respectifs, on passe de 10 000 à 1 000 000 de sous-images uniques. En utilisant les images miroirs pour l'image I et les images MS et MS2, ce nombre est porté à 8 000 000 sous images uniques.

Dans la pratique, les étapes suivantes sont mises en œuvre :
(a) à l'aide d'un logiciel de dessin vectoriel, on réalise l'image décor source IS, avec une complexité appropriée pour que sa subdivision en N x N carreaux (ou N x P carreaux par exemple pour une image décor qui n'est pas carrée), permette d'engendrer des sous-images uniques ;
b) à l'aide d'un logiciel de dessin vectoriel, on réalise une ou plusieurs images motifs sources MS, MS2, ... contenant des éléments graphiques simples, de préférence un élément par carreau lorsqu'on réalise la même subdivision que celle de l'image décor ;
c) un traitement numérique génère ensuite des fichiers vectoriels des différentes sous-images de l'image décor source IS et de la ou des images motifs sources MS ;
d) un traitement numérique de superposition de calques génère ensuite les différentes sous images combinées.

Dans le cas où le système exploite également les images miroirs, on ajoute les étapes de génération de l'image décor miroir et de la ou des images motifs miroirs en amont de la subdivision, ou bien les étapes de génération des sous-images décor miroirs et des sous-images motifs miroirs en aval de la subdivision (ou toute combinaison de ces deux approches).

Avantageusement, une fois que les fichiers de toutes les sous-images à imprimer sur articles ont été générés, on met en œuvre un traitement numérique de détection de doublons, basé de préférence sur le même traitement d'analyse d'image que celui qui sera mis en œuvre dans l'application hébergée dans les terminaux utilisateurs.

Les doublons détectés sont éliminés.

Les fichiers des sous-images subsistants sont ensuite, le cas échéant, combinés avec un fichier principal pour impression sur articles, de manière à obtenir une diversification des impressions et faire en sorte que chaque article puisse correspondre à un code unique comme on va le développer dans la suite.

Pour attribuer à une sous-image unique un code unique, différentes approches sont possibles. De préférence, on forme un code unique à partir d'une analyse des caractéristiques géométriques et colorimétriques intrinsèques de chaque sous-image imprimée ; la solution disponible commercialement sous la dénomination « LTU mobile » et proposée par la société Jastec France est capable de réaliser cette fonction.

Préférentiellement, cette analyse d'effectue de façon insensible aux couleurs (en se focalisant en particulier sur les tracés des éléments vectoriels de l'image), de façon à éviter que deux terminaux communiquants dont les caméras possèdent des réponses colorimétriques différentes soient susceptibles de générer des codes différents pour une même image unique.

Le procédé met en œuvre un équipement d'impression El apte à imprimer une multiplicité d'emballages ou supports de décor Sx pour articles, chaque emballage intégrant une image codante unique ICx comme décrit ci-dessus.

Il peut s'agir de tout type de technologie d'impression, mais l'équipement est de préférence un équipement d'impression numérique laser ou à jets d'encre de dernière génération.

L'équipement d'impression El est piloté de manière à imprimer les emballages ou supports Sx, les visuels de ces emballages étant générés par exemple en intégrant à un fichier d'image de base, commun pour tous les emballages, la variété d'images codantes uniques IC susmentionnées. Un lien entre chaque emballage et une adresse unique est ainsi créée.

On notera ici que par emballage, on entend tout support imprimable apte à être intégré, au stade de la chaîne de fabrication ou en aval, à une unité de production d'articles à grande échelle.

Il peut s'agir par exemple de manchons thermorétractables, étiquettes adhésives, cartons, tubes, etc., aptes à être placés sur des conditionnements tels que bouteilles, pots, flacons ou tous autres récipients, sans que ceci ne soit nullement limitatif.

En variante et pour certains types d'articles, on peut réaliser l'impression directement sur les articles.

Selon d'autres variantes, les images variables peuvent être générées sans recourir à une image source commune. Par ailleurs, l'image de base commune à tous les articles peut être inexistante.

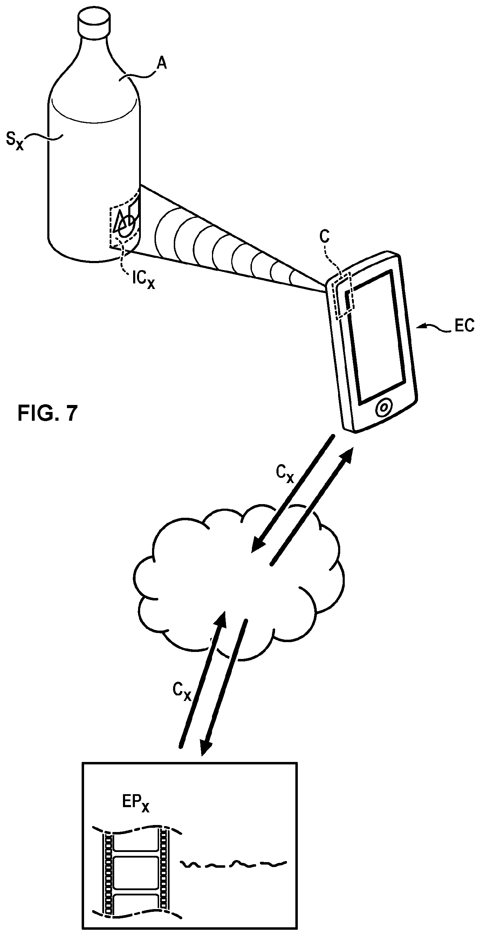

Ultérieurement, et maintenant en référence à la Figure 7, lorsqu'une personne prend possession de l'un des articles (article acheté, article offert en cadeau, etc.) elle peut, à l'aide d'un téléphone intelligent, d'une tablette ou d'un autre équipement communicant EC pourvu d'une caméra numérique C et d'une application logicielle dédiée à l'extraction de codes contenus dans les images codantes, capturer l'image codante ICx imprimée sur l'emballage Sx de l'article A l'aide de ladite caméra et extraire le code contenu dans l'image codante ICx, et l'équipement accède alors automatiquement via un réseau de communications tel que l'Internet à une page EPx unique accessible sur un serveur, matérialisant un espace personnel accessible en ligne et désignée par l'adresse formée par le code extrait Cx ou dérivée de ce code. Selon le type d'encodage, cette extraction de code peut être effectuée soit simplement par un traitement appliqué à l'image capturée, soit par un prétraitement appliqué à l'image capturée et comparaison de points caractéristiques avec une table de points caractéristiques, et en utilisant un code mémorisé à la ligne de la table pour laquelle il existe une correspondance entre les points caractéristiques.

Cette page de serveur EPx propose un certain nombre de fonctionnalités permettant de personnaliser son contenu, soit à l'usage de la personne qui détient l'article, soit à l'usage d'une personne a qui il a l'intention de donner ou de vendre l'article. Cette personnalisation peut comprendre notamment :
- le téléchargement vers le serveur, pour être accessibles à la même adresse, de contenus multimédia préexistants ou créés pour l'occasion (séquences vidéo, images, musiques, messages vocaux,
- la saisie de messages destinés à être affichés à cette adresse,
- d'ajouts de liens permettant de bénéficier de promotions, d'avantages, de privilèges,
- etc.

Par la suite, la personne qui détient cet article (soit son détenteur original, soit une personne à laquelle l'article a été offert par exemple) peut accéder à cet espace unique et retrouver ces contenus, messages, liens, etc.

Selon une alternative, il est également possible de personnaliser les espaces associés individuellement aux produits soit avant que les produits ne soient distribués, soit après. En effet, en mémorisant l'ensemble des adresses uniques désignées par autant d'images codantes uniques sur les produits, il est possible pour un organisateur de loteries, tirages au sort, etc. d'attribuer des droits particuliers à certaines de ces adresses, choisies au hasard ou dans une liste ordonnée. Par exemple on peut prévoir que sur une série de 10.000 produits mis dans le commerce, 100 donnent lieu à des gains ou avantages particuliers.

Ces gains ou avantages peuvent se matérialiser par des informations particulières tels que liens vers des sites offrant des cadeaux, affichage de codes promotionnels auprès de certains marchands, etc.

Ces fonctionnalités peuvent en outre être mises en œuvre de façon dynamique et automatisée, un avantage pouvant être proposé pour une période de temps prédéterminée. Ceci peut amener les détenteurs de produits a effectuer une capture des images portées par les articles à plusieurs reprises pour vérifier si par exemple ils on gagné un lot.

Une autre application de l'invention peut consister à apparier deux codes contenus dans les images codantes de deux articles (ou davantage), par exemple choisis au hasard. On crée ainsi des paires des codes permettant de bénéficier de privilèges, de lots, etc.

Par la suite, par exemple dans le cas où deux personnes détentrices d'un même article se rencontrent, une capture de image codante portée par l'un des articles puis de l'image codante portée par l'autre article, par le même équipement communicant, suivie de l'interrogation par cet équipement communicant d'un serveur où les appariements sont mémorisés, permet, dans le cas où un tel appariement des deux codes est constaté, de recueillir au niveau de l'équipement une information indiquant qu'un privilège est accordé, qu'un lot et gagné, etc.

On peut également faire varier dynamiquement les appariements pour permettre à des personnes se rencontrant de tenter leur chance plusieurs fois.

Par ailleurs, on notera que les données écrites par les détendeurs d'articles dans les espaces personnels désignés par les codes portés par ces articles peuvent faire l'objet d'une structuration, par exemple en base de données commerciales.

En outre, pour éviter que, lorsque les articles sont exposés à la vente (par exemple dans un supermarché), les images codantes soient lues avant achat des produits pour accéder aux espaces personnels et par exemple y charger des contenus de façon malveillante ou parasitaire, plusieurs solutions peuvent être envisagées :
- on peut prévoir que le code dérivé d'une image codante ne soit exploitable que lorsque l'image a été capturée deux fois par le même équipement communicant, avec un certain intervalle de temps entre les deux captures (intervalle pouvant être variable selon le contexte),
- peut prévoir que le code dérivé d'une image codante ne soit exploitable qu'après qu'une autre image codante, par exemple affichée en sortie du lieu de vente ou sur un lieu de consommation, ait été capturée et décodée par le même équipement communicant,
- on peut prévoir une interaction entre le système d'accès à un espace personnel à l'aide d'un code contenu dans une image codante et le système de paiement du magasin,
- etc.

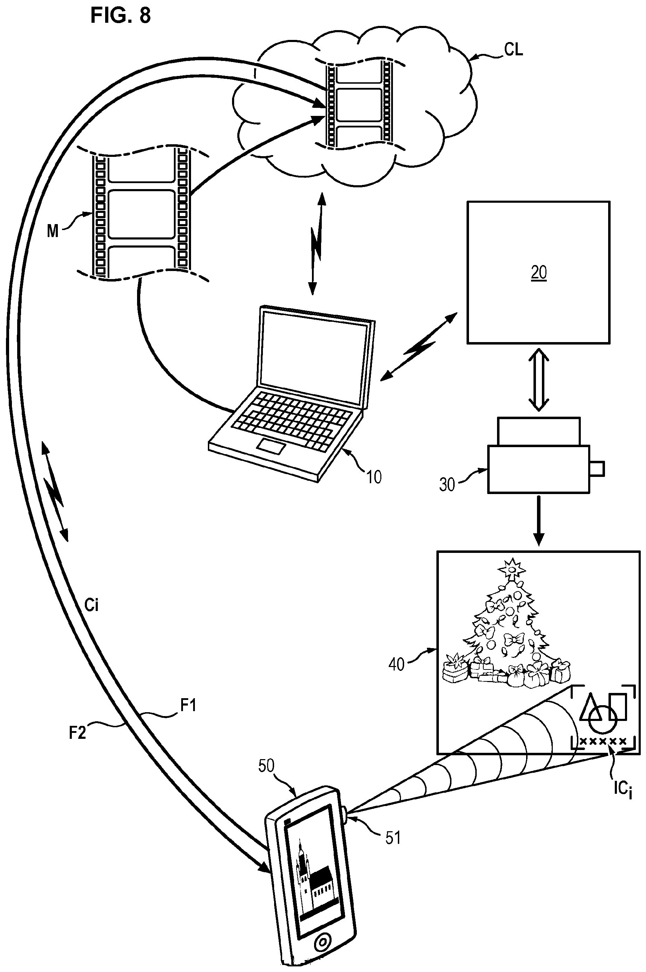

En référence maintenant à la Figure 8, on va maintenant décrire un usage particulier de la génération d'images codantes uniques de la présente invention, dédié aux cadeaux avec message(s) personnalisé(s) de la personne offrant le cadeau.

Un système informatique utilisateur 10 tel qu'un ordinateur personnel, une tablette, un téléphone intelligent, etc., contient des moyens pour interagir avec un serveur distant 20, tels qu'un programme de navigation Web associé à un équipement de communication par réseau, de façon connue en soi.

Cette interaction, outre les étapes éventuelles de sélection d'un cadeau, paiement, etc., comprend les étapes consistant à rendre accessible, via un réseau tel que l'Internet, un contenu multimédia M tel qu'une séquence vidéo, une séquence de diapositives, contenant par exemple un message personnel pour la personne qui reçoit le cadeau.

Ce contenu multimédia peut être aisément obtenu avec un dispositif équipé d'une caméra, tel qu'un téléphone intelligent ou une tablette, ou avec une caméra du système utilisateur 10 lui-même.

Dans une forme de réalisation de base, cette étape comprend le téléchargement du contenu multimédia vers le serveur 20 ou vers un autre serveur auquel le serveur 20 est associé, pour permettre à une personne recevant le cadeau d'accéder ultérieurement à ce contenu comme on l'expliquera dans la suite.

Dans une autre forme de réalisation, et comme également illustré sur la Figure 7, cette étape peut comprendre un stockage dans le nuage CL (« Cloud » en terminologie anglo-saxonne) du contenu multimédia, une adresse telle qu'une adresse URL (« Uniform Resource Locator » en terminologie anglo-saxonne) étant associée avec ce contenu pour ultérieurement accéder au contenu et effectuer sa lecture.

Dans une autre forme de réalisation encore, on peut prévoir d'utiliser le système utilisateur 10 comme serveur permettant de stocker le contenu multimédia et d'y accéder.

Lorsque le serveur 20 reçoit une requête de la part du système utilisateur 10 de la personne offrant le cadeau, il génère un emballage intégrant une image variable unique ICx encodant l'adresse Cx (typiquement l'adresse URL) du contenu multimédia, laquelle adresse, selon le type de stockage du contenu multimédia, est soit déterminée au niveau du système 10 et envoyée au serveur 20, soit déterminée au niveau du serveur.

La génération de l'image variable codante est de préférence réalisée comme décrit précédemment, ici au cas par cas en lieu et place d'une génération en grande série comme décrit précédemment.

Au serveur 20 est associé un équipement d'impression 30 apte à imprimer des emballages pour articles.

L'équipement d'impression est piloté par le serveur 20 ou par un autre système informatique relié au serveur 20, de manière à imprimer l'emballage 40 du cadeau commandé, le visuel de cet emballage étant généré en intégrant à un fichier d'image de base, commun pour tous les emballages, l'image codante unique ICx susmentionnée. Un lien entre l'emballage et la séquence multimédia est ainsi créé.

Ultérieurement, lorsque la personne destinataire du cadeau reçoit celui-ci, elle peut, à l'aide d'un téléphone intelligent, d'une tablette ou d'un autre équipement communicant 50 pourvu d'une caméra numérique 51 et d'une application logicielle dédiée à l'extraction de codes contenus dans des codantes, capturer l'image codante imprimée sur l'emballage l'aide de ladite caméra et extraire le code contenu dans l'image codante ICx, et l'équipement accède alors automatiquement (flèche F1) au contenu multimédia stocké à une adresse formée par le code extrait ou contenue dans celui-ci, et lit le contenu, par exemple en mode flux (« streaming » en terminologie anglo-saxonne), un téléchargement du contenu avant lecture étant toutefois possible, comme illustré sur la flèche F2.

Ainsi, en supplément d'autres personnalisations possibles de l'emballage 40 (messages textuels, photographies, etc.), l'emballage produit selon l'invention possède un autre type de personnalisation, avec un lien vers une vidéo ou un autre message multimédia préparé à l'avance par celui qui offre le cadeau, et ceci sans avoir à intégrer à l'emballage un motif optique (code-barres, OR-code, etc.) susceptible de nuire à l'apparence globale de l'emballage, et en assurant que l'ensemble des images variables soient cohérentes entre elles et se marient avec le visuel de base de l'emballage de la façon souhaitée.

Dans une forme de réalisation, le contenu multimédia, tel qu'un message vidéo, peut être concaténé avec une vidéo d'entreprise ou une vidéo publicitaire au moment où elle est lue par son destinataire.

Optionnellement, l'emballage réalisé en impression numérique peut également comporter une seconde image, de préférence du même type que l'image VDP codante telle que décrite précédemment, dans laquelle est encodée une adresse (par exemple une adresse email de la personne offrant le cadeau, associée à une fonction « mailto »), que la personne ayant reçu le cadeau peut prendre en photo avec la caméra 51 de son équipement 50 de manière à envoyer un message de remerciements à la personne ayant offert le cadeau. Le code intégré à la seconde image VDP peut en variante contenir une adresse URL d'un serveur de réponse dédié, sur lequel la personne ayant reçu le cadeau devra d'abord saisir ses détails personnels (nom, adresse, adresse de courriel, etc.) puis saisir une réponse (ou télécharger une photographie ou une vidéo, selon les mêmes principes que ceux décrits dans ce qui précède). Ceci permet, à des fins commerciales, de recueillir également des informations sur la personne recevant le cadeau. Dans ce cas également, le message vidéo peut être concaténé avec une vidéo d'entreprise ou une vidéo publicitaire lorsqu'elle est lue par son destinataire.

Une autre possibilité consiste à faire précéder le message du contenu multimédia M par un message promotionnel de la marque du cadeau. A cet effet, le serveur peut comporter des moyens pour ajouter au contenu M un tel message promotionnel.

La personnalisation décrite dans ce qui précède peut être réalisée au moment où le cadeau est acheté (par exemple par achat en ligne) ou ultérieurement, après achat du cadeau. Dans ce dernier cas, le processus est par exemple le suivant :
a) une personne achète un article (le cadeau) dans une boutique. Sur l'emballage (standard) de l'article est imprimée une image VDP encodant une adresse **URL** constituant l'adresse d'un serveur de personnalisation (un site Internet).
b) avec son système utilisateur 10, la personne se connecte à ce site Internet. Avantageusement, afin d'éviter que des personnes mal intentionnées abusent du système, le serveur demande à la personne de saisir des données personnelles (nom, adresse, adresse courriel, etc.) ainsi qu'un code textuel spécifique (par exemple un mot de passe unique ou **OTP** pour « One-Time Password » en terminologie anglo-saxonne), tel qu'il est également imprimé sur l'emballage ; ceci peut être effectué sur le système informatique de l'acheteur après qu'il soit rentré de faire son achat, ou en tout autre lieu avec un système portable tel qu'un téléphone intelligent, voire dans la boutique où il a effectué son achat, à l'aide d'une machine de personnalisation dédiée prévue dans la boutique pour les clients.
c) le serveur compare le code reçu avec un code préalablement mémorisé de façon à permettre à l'utilisateur d'exécuter la personnalisation. Si le même code a été précédemment utilisé par le même utilisateur, l'accès à la personnalisation est refusé.
d) au moyen d'une interface dédiée, l'utilisateur peut télécharger vers le serveur un message textuel, un ou plusieurs fichiers de photographies et une vidéo ou un lien vers une vidéo ; la vidéo peut être téléchargée en tant que fichier préexistant, ou transmise en flux vers le serveur pendant qu'elle est enregistrée à l'aide d'une caméra Internet (webcam) ou autre caméra du système 10 ; en variante, l'utilisateur peut télécharger un lien (URL) vers une vidéo préexistante publique ou privée, par exemple une vidéo accessible par le serveur Youtube^{®}. De façon analogue, une ou plusieurs images fixes peuvent être téléchargées vers le serveur ; avant validation, il est possible de proposer à l'utilisateur d'imprimer sur son imprimante personnelle une image de l'emballage telle qu'elle apparaîtra, par exemple sous forme d'un fichier **PDF** généré au niveau du serveur et transmis par celui-ci, et/ou de visualiser une restitution tridimensionnelle de l'emballage, soit au sein d'une page Web générée dynamiquement par le serveur, soit également contenue dans un fichier PDF.
e) à partir de là, un service d'impression personnalisée relié au serveur imprime un emballage personnalisé comportant le message textuel, la ou les photographies et un lien encodé dans une image codante unique IC prise dans un stock d'images codantes uniques mémorisées ou générée à la volée (code sous forme d'une adresse URL publique ou privée) et pointant vers la vidéo ; un type (format, type de papier ou de film d'emballage, modèle, etc.) de l'emballage personnalisé peut être déterminé soit à partir de l'URL utilisée pour accéder au serveur de personnalisation, soit à partir d'un mot de passe unique saisi pour autoriser la personnalisation.
f) cet emballage personnalisé est alors envoyé par la poste ou par service de messagerie à l'utilisateur, qui peut alors emballer l'article avec cet emballage, soit en tant que seconde couche d'emballage, soit après avoir retiré l'emballage standard d'origine ; l'emballage personnalisé est avantageusement sous forme d'un manchon qui peut être glissé autour de l'article et fixé avec des éléments adhésifs prévus sur le manchon.
f') dans une variante de réalisation, l'emballage personnalisé peut être réalisé « à la maison », et par exemple un fichier PDF contenant l'emballage personnalisé avec le texte, les photos et une zone d'image IC dans laquelle l'adresse de du message vidéo est encodée (c'est-à-dire le fichier PDF de validation susmentionné) est transmis à l'utilisateur pour impression sur sa propre imprimante, puis fixation sur le cadeau ou sur son emballage standard.
g) l'utilisateur envoie alors l'article à son destinataire par la poste, par porteur spécial, etc.

Selon ce processus on effectue une écriture dans l'espace personnel en réponse à une capture d'une image codante unique à l'aide d'un premier équipement communicant (celui de la personne qui offre le cadeau), et une étape d'accès à l'espace personnel au moins en lecture en réponse à une capture de la même image codante unique à l'aide d'un second équipement communicant (celui de la personne qui reçoit le cadeau).

Selon une autre application, on peut prévoir que plusieurs personnes, par exemple lors d'un événement festif, effectuent à l'aide de leur équipement communicant respectif la lecture d'une même image codante (par exemple imprimée sur un contenant alimentaire à partager telle qu'une bouteille, un emballage de pâtisserie, etc. ) pour pouvoir écrire dans cet espace partagé, et par exemple y télécharger des photos.

Le procédé comprend en ce cas des étapes d'accès en écriture à un espace personnel partagé en réponse à des captures de la même image codante unique par différents équipements communicants.

Bien entendu, si l'article est acheté en ligne, les étapes d'achat de l'article et de personnalisation de son emballage peuvent être réalisées en un processus unique ou en deux processus liés l'un à l'autre, avec par exemple une redirection vers un site Internet de personnalisation au cours de la transaction d'achat ou après son achèvement. Alors l'opération d'emballage de l'article avec l'emballage personnalisé est effectuée directement à la source et non pas par l'utilisateur.

Les techniques décrites dans ce qui précède fonctionnent bien dans le cas où des images imprimées sont apposées sur des surfaces planes ou de faible courbure.

On va maintenant décrire un perfectionnement de l'invention visant à permettre la reconnaissance d'images codantes lorsqu'elles sont déformées lors de la mise en œuvre de leur support sur la chaîne de fabrication, et en particulier lorsqu'elles sont apposées sur des surfaces cylindriques, des surfaces galbées, des surfaces de révolution telles que des bouteilles ayant des silhouettes travaillées, l'objectif étant d'éviter les erreurs de décodage du fait de la déformation des images inhérentes à une telle situation.

A cet égard, une des techniques conventionnelles les plus répandues pour appliquer un décor sur un récipient tel qu'une bouteille ou un flacon consiste imprimer une feuille en matériau thermorétractable, à refermer la feuille et coller sur elle-même pour former un manchon, à amener le tube autour du récipient et à appliquer de la chaleur (typiquement un flux d'air chaud) pour provoquer le retrait du matériau et sa mise en contact intime avec la surface extérieure de l'article.

On comprend que ceci implique une transformation de la géométrie du visuel imprimé à plat, ou anamorphose, celui-ci se retrouvant sur une surface courbe.

Ceci peut se produire également avec des étuis en carton déformés lors de leur mise en œuvre, des étiquettes collées sur des surfaces cylindriques, etc.

**Il** en résulte que si des précautions ne sont pas prises, la capture d'une image codante à partir d'une caméra si l'image codante est ainsi anamorphosée. Par exemple, une image codante apposée sur un récipient cylindrique de petit diamètre va présenter des bords fuyants, avec une distorsion dans l'image capturée qui pourra empêcher de décoder l'image et d'en déduire l'adresse d'un contenu qu'elle désigne.

On va maintenant décrire trois variantes du procédé d'apposition d'images codantes sur des produits de consommation courante qui permettent de contourner cette difficulté.

### Variante 1

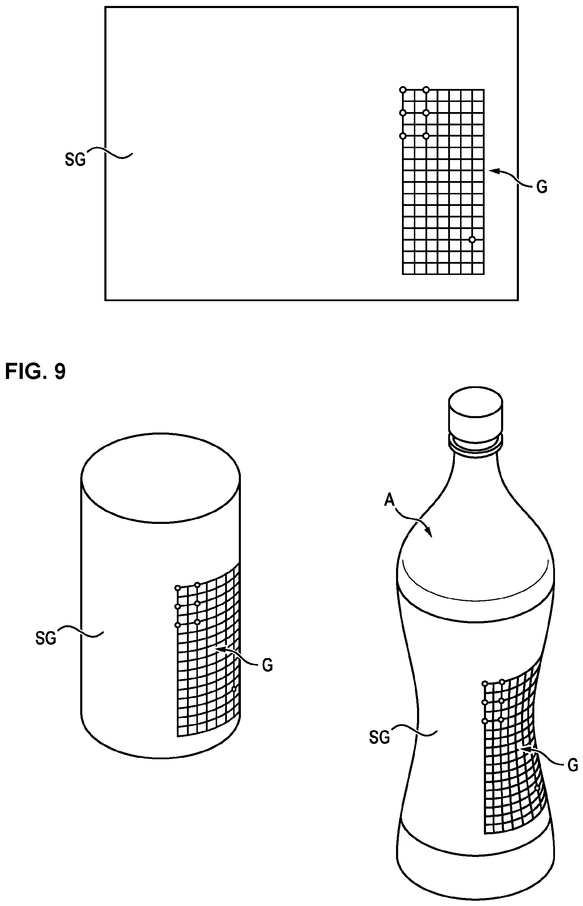

a) un support gabarit SG destiné à former un manchon est imprimé avec un gabarit G et posé sur un article A du type à traiter selon l'invention ; comme l'illustre la Figure 9, ce manchon possède de préférence à l'impression un gabarit G formé d'un quadrillage régulier de lignes orthogonales entre elles et d'espacement constant, avec des lignes d'épaisseurs différentes et/ou des points remarquables (en taille et/ou en forme) au niveau des intersections entre lignes ou à l'intérieur des cases du quadrillage ; après retrait du manchon gabarit sur l'article A (ici une bouteille galbée), on comprend que le quadrillage a été anamorphosé du fait de la forme de l'article, de la même manière que le seront les images codantes lors de l'apposition des manchons individualisés sur la chaîne de production ;
b) une ou plusieurs images de l'article équipé du manchon gabarit après retrait sont prises à l'aide d'une caméra, de préférence avec des angles de vue différents, en se focalisant sur la zone dans laquelle doit se situer l'image codante sur les articles finaux ;
c) à partir des images prises et d'une image de référence représentant le gabarit, telle qu'utilisée pour l'impression du manchon, une loi d'anamorphose est établie par analyse d'image, en comparant l'image gabarit d'origine, régulière, et la ou les images capturées, après recalage de référentiel de façon connue en soi ; les paramètres de cette loi sont essentiellement constitués de vecteurs de déplacement déterminés à partir du déplacement de points remarquables et/ou des coefficients de dilatation/contraction zone par zone, déterminés par les variations de l'espacement entre les lignes du gabarit ;
d) une loi d'anamorphose inverse est établie à partir de la loi d'anamorphose,
e) chaque image codante diversifiée à imprimer sur un article final est traitée en étant soumise à la loi d'anamorphose inverse avant impression sur son manchon respectif, pour être déformée selon cette loi d'anamorphose inverse ;
f) chaque manchon est imprimé avec une image codante déformée respective puis apposé sur l'article et rétracté par apport de chaleur ; on comprend qu'à la fin de cette opération, c'est une image identique à l'image codante d'origine en amont de l'étape e) qui sera visuellement apparente sur chaque article (aux erreurs près).

Ainsi, lors de la capturée ultérieure de l'image par la caméra d'un terminal utilisateur sur un article donné, le logiciel d'analyse et de décodage embarqué est capable de reconstituer le code intégré à l'image et l'adresse accessible par réseau associée de façon unique à cet article.

### Variante 2

a) à d) : étapes identiques aux étapes a) à d) de la variante 1 ;
e) les images codantes sont imprimées telles quelles sur les manchons thermorétractables, et les manchons sont apposés sur les articles sur la chaîne de fabrication :
f) les paramètres de la loi d'anamorphose inverse sont transmis à chaque terminal équipé du programme de décodage d'images codantes, ce programme étant équipé d'un module d'application d'anamorphose à une image, ce module étant apte à recevoir lesdits paramètres ;
g) une image capturée par un tel terminal sur un article pourvu d'un manchon comme obtenu à l'étape e) est soumise à la loi d'anamorphose inverse dans le terminal, pour reconstituer l'image d'origine (aux erreurs près) ;
h) l'image reconstituée est décodée pour en dériver l'adresse unique accessible par réseau.

### Variante 3

Cette variante est mise en œuvre à partir de données numériques d'une image gabarit et données numériques représentatives de la surface du volume tridimensionnel de l'article destiné à recevoir l'image, et de données numériques représentatives d'un ou de plusieurs axes de visée virtuelle et d'une distance focale virtuelle associée. Elle comprend les étapes suivantes :
a) des moyens de traitement numérique réalisent un placage virtuel de l'image gabarit sur la surface du volume 3D, pour ainsi placer les points remarquables de l'image gabarit sur ladite surface du volume 3D, en mémorisant les coordonnées dans l'espace desdits points remarquables,
b) à partir de ces coordonnées et d'un axe de visée virtuelle et de sa distance focale virtuelle associée, on réalise par traitement numérique une projection des positions des points remarquables sur une image virtuelle orthogonale à l'axe de visée virtuelle,
c) à partir de cette projection, les moyens de traitement déterminent une loi d'anamorphose, ou une série de lois d'anamorphose correspondant aux différents axes de visée virtuelle ;
d) chaque image unique à apposer sur un article est soumise dans les moyens de traitement numérique à la ou aux lois d'anamorphose, et les images anamorphosées sont mémorisées ;
e) une image capturée sur un article à l'aide de l'équipement communicant d'un utilisateur est envoyée (éventuellement après un traitement préalable destiné par exemple à en compacter la taille, à n'en garder que des extraits, etc.) est transmise à un serveur ayant accès aux images anamorphosées mémorisées ;
f) dans le serveur, l'image reçue de l'équipement communicant est comparée aux images anamorphosées mémorisées ;
g) si une correspondance est trouvée, le code représentatif de l'adresse d'un contenu personnel associé à cet article, ou l'adresse elle-même, est généré et envoyé à l'équipement communicant pour que ce dernier accède de façon personnelle à cette adresse.

On notera que la mise en œuvre de cette variante avec plusieurs axes de visée permet d'établir des lois d'anamorphose pour plusieurs points de vue, imposant de ce fait moins de contraintes à l'utilisateur lorsqu'il doit capturer l'image unique à l'aide de son équipement car plusieurs angles de visée étant possibles.

Bien entendu, l'homme du métier pourra apporter à l'invention décrite ci-dessus de nombreuses variantes et modifications.

En particulier :
- la mise en œuvre de l'invention avec traitement anamorphique s'applique non seulement au cas de manchons thermorétractables, mais également et plus généralement à tous les cas où l'application d'un support d'une image unique sur un article ou autour d'un article ou d'un groupe d'articles donne lieu à une déformation de l'image (notamment papiers d'emballage, étuis en carton, étiquettes collées, etc. sur des surfaces non planes) ;
- les procédés selon l'invention côté utilisateur peuvent être complétés, notamment à des fins de sécurisation, par tout moyen additionnel tel que :
   * lecture, en plus de l'image codante, d'un code optique (code-à-barres, QR-Code, etc.) imprimé sur le même support que l'image unique ou sur un support différent,
   * lecture visuelle et saisie sur l'équipement communicant de caractères alphanumériques imprimés sur le même support que l'image unique ou sur un support différent,
   * envoi par message SMS vers l'équipement communicant ou un autre équipement de l'utilisateur d'un code à saisir sur l'équipement communicant pour valider l'accès à un espace personnel ou à un contenu,

## Revendications

1. Procédé pour personnaliser une pluralité d'articles (A) de grande consommation individuels ou groupés, **caractérisé en ce qu'**il comprend les étapes suivantes :
- générer une pluralité d'images décors uniques dans un premier temps par application de traitements numériques de diversification comprenant au moins des transpositions, des rotations et des changements à des fragments une image décor source vectorielle (IS), ces images étant ainsi visuellement cohérentes entre elles, puis dans un second temps par superposition aux images décors uniques issues desdites traitements des images motifs (M(i', j')) issues d'une fragmentation d'au moins une image motif source (MS, MS2), de manière à accroitre la diversité desdites images décors uniques,
- générer en association avec chaque image décor unique un code unique (Cx) représentatif d'une adresse unique accessible par réseau à partir d'un équipement communicant, chaque image unique (ICx) étant générée de telle sorte qu'elle permette, par analyse d'image en sortie d'une caméra numérique d'un tel équipement communicant ayant capturé cette image unique (ICx), de reconstituer ledit code unique associé (Cx), et
- imprimer les images décors uniques sur une pluralité d'articles respectifs (A) ou sur une pluralité de supports (Sx) destinés à être fixés sur ladite pluralité d'articles individuels ou groupés avec un système d'impression numérique.

2. Procédé selon la revendication 1, **caractérisé en ce que** la ou chaque image motif source (MS, MS2) comprend des éléments géométriques simples (Gk) comprenant des traits, des formes fermées ou ouvertes, ou des combinaisons de tels traits ou formes, contenus respectivement dans les différentes zones d'un quadrillage (C(i,j)) utilisé pour la fragmentation.

3. Procédé selon l'une des revendications 1 et 2, **caractérisé en ce que** les images uniques sont générées également à partir d'une image miroir (IS' ; MS') de la ou de chaque image source (IS ; MS).

## Patentansprüche

1. Verfahren zum Personalisieren einer Vielzahl von individuellen oder gruppierten Massenkonsum-Artikeln (A), **dadurch gekennzeichnet, dass** es die folgenden Schritte umfasst:
- Erzeugen einer Vielzahl von einzigartigen Dekorbildern zunächst durch Anwendung von numerischen Behandlungen zur Diversifizierung, umfassend mindestens Transpositionen, Rotationen und Änderungen an Fragmenten eines vektoriellen Quellendekorbilds (IS), wobei diese Bilder dadurch untereinander visuell kohärent sind, dann durch Überlagerung auf die einzigartigen Dekorbilder, die aus diesen Behandlungen stammen, von Bildmotiven (M(i', j')), die aus einer Fragmentierung von mindestens einem Quellenmotivbild (MS, MS2) stammen, um die Diversität der einzigartigen Dekorbilder zu steigern,
- Erzeugen, in Assoziation mit jedem einzigartigen Dekorbild, eines einzigartigen Codes (Cx), der für eine einzigartige Adresse repräsentativ ist, auf die ausgehend von einer Kommunikationsausrüstung durch ein Netzwerk zugegriffen werden kann, wobei jedes einzigartige Bild (ICx) derart erzeugt wird, dass es durch Bildanalyse bei der Ausgabe einer digitalen Kamera einer solchen Kommunikationsausrüstung, die dieses einzigartige Bild (ICx) aufgenommen hat, gestattet, den assoziierten einzigartigen Code (Cx) wiederherzustellen, und
- Drucken der einzigartigen Dekorbilder auf eine Vielzahl von jeweiligen Artikeln (A) oder auf eine Vielzahl von Trägern (Sx), die dazu bestimmt sind, an der Vielzahl von individuellen oder gruppierten Artikeln befestigt zu werden, mit einem digitalen Drucksystem.

2. Verfahren nach Anspruch 1, **dadurch gekennzeichnet, dass** das oder jedes Quellenmotivbild (MS, MS2) einfache geometrische Elemente (Gk) umfasst, umfassend Striche, geschlossene oder offene Formen oder Kombinationen von solchen Strichen oder Formen, die jeweils in den unterschiedlichen Zonen eines Gittermuster (C(i,j)) umfassend sind, das für die Fragmentierung verwendet wurde.

3. Verfahren nach einem der Ansprüche 1 und 2, **dadurch gekennzeichnet, dass** die einzigartigen Bilder auch ausgehend von einem Spiegelbild (IS'; MS') des oder jeden Quellenbilds (IS; MS) erzeugt werden.

## Claims

1. A method for personalizing a plurality of individual or grouped consumer items (A), **characterized in that** it comprises the following steps:
- generating a plurality of unique decorative images by first applying diversification digital treatments comprising at least transpositions, rotations and changes to fragments of a source decorative vector image (IS), these images thus being visually coherent relative to each other, and then superimposing to the unique decorative images obtained from said treatments pattern images (M(i', j')) obtained from the fragmentation of at least one source pattern image (MS, MS2), so as to increase the diversity of said unique decorative images,
- generating in association with each unique decorative image a unique code (Cx) representing a unique address accessible via a network from a communicating piece of equipment, each unique image (ICx) being generated so as to allow, through image analysis at the output of a digital camera of such a communicating piece of equipment having captured said unique image (ICx), the reconstitution of said associated unique code (Cx), and
- printing the unique decorative images onto a plurality of respective items (A) or on a plurality of carriers (Sx) intended to be affixed to said plurality of individual or grouped items by means of a digital printing system.

2. The method according to claim 1, **characterized in that** the or each source pattern image (MS, MS2) comprises simple geometric elements (Gk) comprising dashes, closed or open shapes, or combinations of such dashes and shapes, respectively contained in the individual zones of a grid (C(i,j)) used for the fragmentation.

3. The method according to either of claims 1 and 2, **characterized in that** the unique images are also generated from a mirror image (IS'; MS') of the or each source image (IS; MS).
